# EUROPÄISCHE PATENTSCHRIFT

(11) **EP 3 108 017 B1**
(45) Veröffentlichungstag und Bekanntmachung des Hinweises auf die Patenterteilung: **04.04.2018**
(21) Anmeldenummer: 15702667.5
(22) Anmeldetag: 21.01.2015
(51) Int. Cl.: C21C 5/35, C21C 5/46, C21C 5/48, C21C 5/52, F27D 27/00

(54) **VERFAHREN ZUM UMWÄLZEN EINES METALLBADES UND OFENANLAGE**
METHOD FOR THE CIRCULATION OF A METAL BATH AND FURNACE CONSTRUCTION
PROCÉDÉ DE CIRCULATION D'UN BAIN DE MÉTAL ET INSTALLATION DE FOUR

(30) Priorität: 19.02.2014 EP 14155804
(43) Veröffentlichungstag der Anmeldung: 28.12.2016
(73) Patentinhaber: Primetals Technologies Austria GmbH, 4031 Linz (AT)
(72) Erfinder: WEINZINGER, Michael, 4501 Neuhofen a.d. Krems (AT); HARTL, Franz, A-4020 Linz (AT); KUEHAS, Thomas, A-4225 Luftenberg (AT); KURZMANN, Thomas, A-4614 Marchtrenk (AT); LEHOFER, Martin, Plainsboro NJ 08536 (US); RIESE, Axel, A-4020 Linz (AT); ROHRHOFER, Andreas, A-4020 Linz (AT)
(74) Vertreter: Metals@Linz
(86) Internationale Anmeldenummer: PCT/EP2015/051114
(87) Internationale Veröffentlichungsnummer: WO 2015/124362

(56) Entgegenhaltungen:
- WO-A1-2004/046390
- US-A- 4 758 269
- US-A- 4 836 433
- PROTOPOPOV E V ET AL: "DEVELOPMENT OF INJECTION DEVICES FOR LIQUID-PHASE REDUCTION CONVERTERS", STEEL IN TRANSLATION, ALLERTON PRESS, NEW YORK, NY, US, Bd. 32, Nr. 6, 1. Januar 2002 (2002-01-01) , Seiten 1-08, XP001170873, ISSN: 0967-0912

## Beschreibung

Die Erfindung betrifft ein Verfahren zum Umwälzen eines Metallbades in einem metallurgischen Gefäß, bei dem ein Spülgas in das Metallbad eingeleitet wird. Außerdem betrifft die Erfindung eine Ofenanlage zur Durchführung des Verfahrens aufweisend ein metallurgisches Gefäß.

Es ist bekannt, ein solches Verfahren bzw. eine solche Ofenanlage bei einer Gewinnung/Verarbeitung von Metallen, insbesondere bei einer Erzeugung von Stahl aus Roheisen, einzusetzen.

Ein Beispiel für ein Verfahren der eingangs genannten Art ist das sogenannte LD-Verfahren zur Stahlerzeugung (auch Linz-Donawitz-Verfahren oder Sauerstoffaufblas-Verfahren genannt). Beim LD-Verfahren werden flüssiges Roheisen, dem eventuell Schrott beigefügt wird, und ein Schlackenbildner, wie z.B. Kalk oder Dolomit, in einen Konverter (ein metallurgisches Gefäß) gefüllt. Das flüssige Roheisen und der Schlackenbildner bilden dabei ein Metallbad aus. Mit Hilfe einer Gaslanze, die zentral durch eine Öffnung an der Oberseite des Konverters geführt ist, wird anschließend Sauerstoff mit einem hohen Druck (bis zu 12 bar) auf das Metallbad aufgeblasen.

Ein Zweck des LD-Verfahrens ist, einen Gehalt unerwünschter Begleitelemente im flüssigen Roheisen, wie z.B. Kohlenstoff, Silizium, Mangan, Schwefel und/oder Phosphor, zu senken (auch als "Frischen" des Roheisens bezeichnet). Beim Aufblasen des Sauerstoffs verbrennen die unerwünschten Begleitelemente und entweichen als Gase oder werden durch den Schlackenbildner in Form von flüssiger Schlacke gebunden.

In einem Reaktionszentrum der Verbrennung (dem "Brennfleck") entstehen hohe Temperaturen (2500 bis 3000 °C) und es kommt zu einer Durchwirbelung/Umwälzung des Metallbades. Diese Umwälzung sorgt dafür, dass noch nicht "gefrischte" Teile des Metallbades an den Brennfleck herangeführt werden und die in diesen Teilen des Metallbades enthalten Begleitelemente verbrennen.

Optionalerweise wird beim LD-Verfahren zur besseren Umwälzung des Metallbades mit Hilfe von Spülsteinen (poröse und/oder Gaskanäle aufweisende Steine), die in einen Boden des Konverters eingebracht sind, ein weiteres Gas, wie z.B. Argon oder Stickstoff, als Spülgas in das Metallbad eingeblasen.

Es ist ein bekanntes Problem bei Verfahren der eingangs genannten Art, insbesondere beim LD-Verfahren, dass Vibrationen (Wellen) im Metallbad auftreten können. Diese Vibrationen im Metallbad übertragen sich auf das metallurgische Gefäß, in welchem sich das Metallbad befindet, sodass es zu Vibrationen des metallurgischen Gefäßes kommt. Die Vibrationen des metallurgischen Gefäßes wiederum übertragen sich auf Elemente, die mit dem metallurgischen Gefäß verbunden sind, wie z.B. Lager und/oder Antriebe, die dadurch hoch belastet werden.

Die Vibrationen können so stark sein bzw. solch eine große Amplitude aufweisen (im Folgenden vereinfachend "Ausmaß der Vibration" genannt), dass das Verfahren unterbrochen werden muss, um Beschädigungen an einer Anlage, deren Bestandteil das metallurgische Gefäß ist, wie z.B. an einer Ofenanlage, zu vermeiden. Es kann insbesondere dann notwendig sein, das Verfahren zu unterbrechen, wenn die Vibration eine Frequenz nahe einer Eigenfrequenz der Anlage aufweist, weil es in einem solchen Fall zu einer Resonanzkatastrophe an der Anlage kommen kann. Unterbrechungen des Verfahrens führen zu langen Prozessdauern und folglich auch zu Produktivitätseinbußen.

Unter Umständen können die Vibrationen dazu führen, dass sich eine Ausrichtung des metallurgischen Gefäßes verändert. Dann kann es notwendig sein, das metallurgische Gefäß neu auszurichten und Haltebremsen, die das metallurgische Gefäß in seiner Position halten, neu zu verspannen. In diesem Fall muss das Verfahren ebenfalls unterbrochen werden, was zu weiteren Produktivitätseinbußen führt. Ferner führen das Neuausrichten des metallurgischen Gefäßes und das Neuverspannen der Haltebremsen zu einem hohen Verschleiß an Bremsbacken der Haltebremsen.

Aus der WO 2004/046390 A1 ist ein Gaszuleitungssystem für einen Konverter bekannt, wobei eine den Düsen vor- oder zugeordnete Zuflussdrosseleinrichtung vorgesehen ist, welche die Gaszufuhr in das Ofeninnere periodisch reduziert oder unterbricht.

Aus der DE 20 2012 103 082 U1 ist ein Ofen zur Entfernung von Verunreinigungen aus Metallschmelzen bekannt. Im Bodenbereich des Ofengefäßes sind Mittel, wie Spülsteine oder Spüllanzen, zur Zuführung von Spülgas vorgesehen.

Eine Aufgabe der Erfindung ist, ein Verfahren zum Betreiben einer Ofenanlage sowie eine Ofenanlage zur Verfügung zu stellen, bei denen Beschädigungen der Ofenanlage vermieden werden können und die Ofenanlage kostengünstig betrieben sowie kostengünstig hergestellt werden kann.

Diese Aufgabe wird erfindungsgemäß durch ein Verfahren zum Umwälzen eines Metallbades in einem metallurgischen Gefäß sowie durch eine Ofenanlage mit den Merkmalen gemäß den jeweiligen unabhängigen Ansprüchen gelöst. Vorteilhafte Ausgestaltungen und/oder Weiterbildungen sind Gegenstand der abhängen Ansprüche sowie der nachfolgenden Beschreibung und können sich sowohl auf das Verfahren als auch auf die Ofenanlage beziehen.

Bei dem Verfahren ist vorgesehen, ein Spülgas in das Metallbad einzuleiten. Das Spülgas wird durch eine systematische Anordnung von Gaseinleitungspositionen in dem metallurgischen Gefäß derart in das Metallbad eingeleitet, dass das Metallbad eine vorgegebene gerichtete Strömung vollführt, wobei zur Erzeugung und/oder Aufrechterhaltung der vorgegebenen gerichteten Strömung das Einleiten des Spülgases gesteuert/geregelt wird, wobei unter Verwendung einer Messeinrichtung, welche zumindest einen Vibrationssensor, zumindest einen Ultraschallsensor und/oder zumindest einen optoelektronischen Sensor umfasst, ein Strömungsbild des Metallbades ermittelt wird.

Bei der Ofenanlage ist ein metallurgisches Gefäß, beispielsweise zum Frischen von Roheisen, vorgesehen. Weiter ist bei der Ofenanlage eine Messeinrichtung zur Untersuchung eines Strömungsbildes eines im metallurgischen Gefäß befindlichen Metallbades vorgesehen, welche zumindest einen Vibrationssensor, zumindest einen Ultraschallsensor und/oder zumindest einen optoelektronischen Sensor umfasst.

Eine Anwendung der Erfindung beim sogenannten AOD-Verfahren (Argon Oxygen Decarburaization oder auch Argon-Sauerstoff-Entkohlung genannt) ist ebenfalls möglich.

Als Spülgas kann vorliegend jedes Gas aufgefasst werden, welches in das Metallbad eingeleitet wird und dabei eine Umwälzung des Metallbades bewirken kann, unabhängig davon, ob das Spülgas im Metallbad eine chemische Reaktion bewirkt, und unabhängig davon, ob das Spülgas mittelbar (z.B. durch eine Gasatmosphäre hindurch) oder unmittelbar in das Metallbad eingeleitet wird.

Unter der vorgegebenen gerichteten, durch das Einleiten des Spülgases gezielt erzeugten Strömung kann solch eine Strömung verstanden werden, die ein vorgegebenes Strömungsbild aufweist. Das heißt, durch das Einleiten des Spülgases wird gezielt ein vorgegebenes Strömungsbild im Metallbad erzeugt/ ausgebildet.

Ferner kann das Ausbilden des vorgegebenen Strömungsbildes durch ein systematisches Einstellen einer Spülgasdurchflussmenge/eines Spülgasdrucks beim Einleiten des Spülgases (an der jeweiligen Spülgaseinleitposition) erreicht werden. Als Spülgasdurchflussmenge kann hierbei ein Volumenstrom des Spülgases verstanden werden. Insbesondere durch Kombination von systematischer Anordnung der Spülgaseinleitpositionen und Einstellen einer Spülgasdurchflussmenge/eines Spülgasdrucks kann gezielt auf das Ausbilden eines Strömungsbildes eingewirkt werden und so das vorgegebene Strömungsbild gezielt erzeugt werden.

Anders ausgedrückt, durch die systematische Anordnung der Spülgaseinleitpositionen und/oder das systematische Einstellen der Spülgasdurchflussmenge/des Spülgasdrucks lässt sich ein Strömungsbild in gewünschter, vorgegebener Weise "maßschneidern".

Das vorgegebene Strömungsbild bzw. die vorgegebene gerichtete Strömung kann an eine Geometrie des metallurgischen Gefäßes angepasst sein/werden. Beispielsweise kann die vorgegebene gerichtete Strömung im Wesentlichen entlang einer Oberfläche eines Torus, insbesondere in poloidaler Richtung des Torus, verlaufen. Solch ein Verlauf der vorgegebenen gerichteten Strömung ist z.B. dann zweckmäßig, wenn das metallurgische Gefäß axialsymmetrisch bezüglich einer Symmetrieachse ist. Diese Symmetrieachse ist zweckmäßigerweise auch eine Symmetrieachse des Torus.

Die Erfindung geht von der Erkenntnis aus, dass das Ausmaß einer Vibration des Metallbades und somit auch das Ausmaß einer des metallurgischen Gefäßes vom Strömungsbild des Metallbades abhängen. Bei einer ungerichteten Strömung sind Stöße zwischen einzelnen Massen-/Fluidelemente des Metallbades wahrscheinlicher als bei einer gerichteten Strömung, in der benachbarte Massen-/Fluidelemente im Gegensatz zur ungerichteten Strömung (annähernd) gleiche Bewegungsrichtungen und Geschwindigkeiten haben. Bei den Stößen zwischen den einzelnen Massen-/Fluidelemente des Metallbades kommt es zu einer Umwandlung von Strömungsenergie in Vibrationsenergie. Daher wird bei einer ungerichteten Strömung (aufgrund einer höheren Stoßwahrscheinlichkeit der Massen-/Fluidelemente) ein größerer Anteil ihrer Strömungsenergie in Vibrationsenergie umgewandelt als bei einer gerichteten Strömung. Folglich kann das Ausmaß der Vibration des Metallbades, und somit auch das Ausmaß der Vibration des metallurgischen Gefäßes, reduziert werden, falls das Metallbad anstatt einer ungerichteten Strömung eine vorgegebene gerichtete Strömung vollführt.

Weiter geht die Erfindung von der Überlegung aus, dass durch die vorgegebene gerichtete Strömung auch eine gleichmäßigere Durchmischung des Metallbades erreicht werden kann, u.a. aufgrund einer stärkeren Umwälzung des Metallbades in dessen Randbereichen. Denn die vorgegebene gerichtete Strömung kann in ihrer Ausrichtung an eine Geometrie des metallurgischen Gefäßes angepasst werden. Durch eine gleichmäßigere Durchmischung des Metallbades werden kürzere Prozessdauern für ein Erreichen einer gewünschten Qualität/eines gewünschten Zustands des Metallbades (z.B. eines vorgegebenen Kohlenstoffgehalts) möglich.

Es ist zweckmäßig, wenn das Spülgas unter Verwendung zumindest eines Spülsteins in das Metallbad eingeleitet wird. Das Spülgas kann dabei unmittelbar in das Metallbad eingeleitet werden. Alternativ oder zusätzlich zum Spülstein kann eine Düse zum Einleiten des Spülgases verwendet werden.

Wie zuvor erwähnt, wird zur Erzeugung und/oder Aufrechterhaltung der vorgegebenen gerichteten Strömung bzw. des vorgegebenen Strömungsbildes das Einleiten des Spülgases gesteuert/geregelt. Das Steuern/Regeln kann unter Verwendung zumindest eines Ventils erfolgen. In bevorzugter Weise wird eine Spülgasdurchflussmenge oder ein Spülgasdruck gesteuert/geregelt, insbesondere unter Verwendung des Ventils. Sinnvollerweise wird diejenige Spülgasdurchflussmenge gesteuert/geregelt, mit der der Spülstein beaufschlagt wird, bzw. derjenige Spülgasdruck gesteuert/geregelt, mit dem der Spülstein auf seiner Gaseingangsseite beaufschlagt wird.

Das Steuern/Regeln der Spülgasdurchflussmenge bzw. des Spülgasdrucks kann unter Verwendung einer Kontrolleinheit erfolgen. Sinnvollerweise wird mit Hilfe der Kontrolleinheit ein Zustand des Ventils gesteuert/geregelt. Vorzugsweise wird eine Schaltfrequenz des Ventils unterhalb einer vorgegebenen/ einstellbaren Schaltfrequenzobergrenze gehalten. Auf diese Weise kann eine Lebensdauer des Ventils verlängert werden.

Vorteilhafterweise wird das Einleiten des Spülgases zunächst gesteuert und anschließend geregelt. In bevorzugter Weise wird das Einleiten des Spülgases bis zu einem Zeitpunkt, an dem die vorgegebene gerichtete Strömung ausgebildet/erzeugt ist, gesteuert und ab diesem Zeitpunkt geregelt. Dies ermöglicht es, die vorgegebene gerichtete Strömung schneller zu erzeugen.

Zweckmäßigerweise wird die Spülgasdurchflussmenge oberhalb einer vorgegebenen Mindestdurchflussmenge gehalten. Sinnvollerweise wird die Mindestdurchflussmenge so gewählt, dass der Spülgasdruck an einer Gasausgangsseite des Spülsteins zumindest so groß ist wie ein Metallbaddruck an der Gasausgangsseite des Spülsteins. Dadurch kann ein Eindringen des Metallbades in den Spülstein verhindert werden. Unter dem Metallbaddruck kann ein Druck verstanden werden, den das Metallbad auf die Gasausgangsseite des Spülsteins ausübt.

Die Mindestdurchflussmenge wird vorzugsweise unter Verwendung der zuvor erwähnten Kontrolleinheit ermittelt/berechnet werden. In eine Berechnung des Mindestwertes können u.a. eingehen: eine Masse des Metallbades bzw. Massen von Bestandteilen des Metallbades und/oder ein Druck im metallurgischen Gefäß. Sinnvollerweise werden besagte Größen zuvor als Parameter an die Kontrolleinheit übermittelt.

Es ist vorteilhaft, wenn die Spülgasdurchflussmenge einen gepulsten, pulsierenden oder sägezahnförmigen zeitlichen Verlauf aufweist. Dies ermöglicht einen reduzierten Spülgasverbrauch, bezogen auf einen Spülgasverbrauch bei einer zeitlich konstanten Spülgasdurchflussmenge. Der zeitliche Verlauf der Spülgasdurchflussmenge kann ferner eine Periodizität aufweisen. Die Periodizität ermöglicht es, eine oszillierende/ rotierende Strömung des Metallbades zu erzeugen bzw. aufrechtzuerhalten. Ferner kann beim Steuern/Regeln der Spülgasdurchflussmenge eine Amplitude, eine Frequenz und/oder eine Pulsdauer der Spülgasdurchflussmenge variiert werden.

In bevorzugter Weise wird die Spülgasdurchflussmenge unterhalb einer vorgegebenen/einstellbaren Höchstdurchflussmenge gehalten. Auf diese Weise kann der Spülgasverbrauch weiter reduziert werden.

Ferner ist es vorteilhaft, wenn nacheinander unterschiedliche Gase, insbesondere (zuerst) Sauerstoff und (anschließend) zumindest ein Inertgas, als Spülgase in das Metallbad eingeleitet werden.

Insbesondere zum Initiieren der vorgegebenen gerichteten Strömung des Metallbades kann Sauerstoff als Spülgas in das Metallbad eingeleitet werden. Durch eine chemischen Reaktion zwischen dem Sauerstoff und Bestandteilen des Metallbades kann das Ausbilden der vorgegebenen gerichteten Strömung des Metallbades beschleunigt werden und/oder der Spülgasverbrauch gesenkt werden, da die chemische Reaktion einen Teil einer benötigen Energie zum Ausbilden der vorgegebenen gerichteten Strömung des Metallbades liefert.

Weiterhin kann zumindest ein Inertgas, wie z.B. Stickstoff oder ein Edelgas, als Spülgas in das Metallbad eingeleitet werden. Vorzugsweise wird zunächst Stickstoff und anschließend Argon in das Metallbad eingeleitet. Für einen vorgegebenen Zeitraum kann Stickstoff als Spülgas in das Metallbad eingeleitet werden, da Stickstoff kostengünstiger ist als Argon. Zum Schluss kann für einen kürzeren Zeitraum Argon als Spülgas in das Metallbad eingeleitet werden, um mögliche Einschlüsse von Stickstoff aus dem Metallbad heraus zu transportieren.

Ferner kann unter Verwendung zumindest einer Gaslanze ein Gas, insbesondere Sauerstoff, in das Metallbad eingeleitet werden. Dabei kann das Gas mittelbar, insbesondere durch eine Gasatmosphäre hindurch, in das Metallbad eingeleitet werden.

Das Einleiten dieses Gases in das Metallbad kann ebenfalls gesteuert/geregelt werden, insbesondere unter Verwendung besagter Kontrolleinheit. Zudem kann das Einleiten dieses Gases an das Einleiten des Spülgases gekoppelt erfolgen oder vom Einleiten des Spülgases entkoppelt erfolgen.

In einer vorteilhaften Weiterbildung wird unter Verwendung der Messeinrichtung zumindest eine Zustandsgröße einer Vibration des metallurgischen Gefäßes ermittelt. Eine solche Zustandsgröße kann eine Amplitude der Vibration sein. Ferner kann eine Frequenz der Vibration eine solche Zustandsgröße sein. Zweckmäßigerweise wird das Strömungsbild des Metallbades unter Verwendung der Zustandsgröße ermittelt.

Des Weiteren ist es vorteilhaft, wenn das Spülgas derart in das Metallbad eingeleitet wird, dass die Zustandsgröße außerhalb eines vorgegebenen/einstellbaren Werteintervalls oder unterhalb eines vorgegebenen/einstellbaren Höchstwerts gehalten wird. Unterbrechungen des Verfahrens zur Vermeidung von Beschädigungen an einer Anlage, deren Bestandteil das metallurgische Gefäß ist, insbesondere an der Ofenanlage, können dadurch entfallen.

So kann das Spülgas z.B. derart in das Metallbad eingeleitet, dass die Amplitude der Vibration des metallurgischen Gefäßes unterhalb eines vorgegebenen/einstellbaren Amplitudenhöchstwerts gehalten wird. Außerdem kann das Spülgas derart in das Metallbad eingeleitet werden, dass die Frequenz der Vibration des metallurgischen Gefäßes außerhalb einer vorgegebenen/ einstellbaren Frequenzintervalls gehalten wird. Sinnvollerweise wird das Frequenzintervall derart gewählt, dass eine Eigenfrequenz der Anlage innerhalb, insbesondere mittig innerhalb, des Frequenzintervalls liegt. Dadurch kann eine Resonanzkatastrophe an der Anlage vermieden werden.

In einer weiteren vorteilhaften Weiterbildung wird zur Ermittlung des Strömungsbildes des Metallbades mit Hilfe eines Kamerasystems, welches zumindest eine Kamera aufweist, eine Videoaufnahme des Metallbades erstellt. Zweckmäßigerweise wird unter Verwendung mehrerer Einzelbilder der Videoaufnahme das Strömungsbild des Metallbades ermittelt.

Vorzugsweise wird das Spülgas unter Verwendung mehrerer Spülsteine in das Metallbad eingeleitet. Denn unter Einsatz mehrerer Spülstein kann das Strömungsbild des Metallbades auf einfache Weise an eine Geometrie des metallurgischen Gefäßes angepasst werden.

Das Spülgas kann derart in das Metallbad eingeleitet werden, dass zumindest zwei der Spülsteine mit unterschiedlichen Spülgasdurchflussmengen beaufschlagt werden. Dabei können die Spülgasdurchflussmengen z.B. in ihrer Amplitude, Frequenz und/oder Phase verschieden sein.

Weiterhin kann das Spülgas derart in das Metallbad eingeleitet wird, dass zumindest zwei der Spülsteine mit gleichen Spülgasdurchflussmengen beaufschlagt werden.

In bevorzugter Weise wird zumindest ein Parameter an die Kontrolleinheit übermittelt, der sich auf ein Steuer-/Regelverhalten der Kontrolleinheit auswirken kann. Ein solcher Parameter kann eine Masse eines Bestandteils des Metallbades sein, wie z.B. die Masse eines flüssigen Metalls, die Masse eines beigefügten Schlackenbildners oder die Masse von beigefügtem Schrott. Zweckmäßigerweise werden für jeden Bestandteil des Metallbades jeweils die Masse des Bestandteils an die Kontrolleinheit übermittelt. Ein anderer solcher Parameter kann ein Gehalt eines Begleitelements im flüssigen Metall sein, wie z.B. ein Kohlenstoffgehalt.

Das metallurgische Gefäß ist vorzugsweise ein Konverter zum Frischen von Roheisen. In bevorzugter Weise ist das metallurgische Gefäß im Wesentlichen axialsymmetrisch. Zweckmäßigerweise ist das metallurgische Gefäß mit einer feuerfesten Ausmauerung ausgestattet. Darüber hinaus umfasst das metallurgische Gefäß zweckmäßigerweise eine Abstichöffnung zum Ableiten des Metallbades. Durch eine Öffnung an einer Oberseite des metallurgischen Gefäßes kann zumindest eine Gaslanze, insbesondere eine ausfahrbare Gaslanze, geführt sein.

Sinnvollerweise ist ein Gasversorgungssystem zum Einleiten eines Spülgases in das Metallbad vorgesehen. Dieses Gasversorgungssystem kann u.a. zumindest eine Gasleitung, zumindest ein Ventil und/oder zumindest einen Spülstein aufweisen. Außerdem kann die zuvor erwähnte Gaslanze ein Bestandteil des Gasversorgungssystems sein.

Zudem kann eine Kontrolleinheit vorgesehen sein, die zum Steuern/Regeln eines solchen Gasversorgungssystems, insbesondere zum Steuern/Regeln des zuvor erwähnten Gasversorgungssystems, vorbereitet ist. Vorzugsweise ist die Kontrolleinheit zum Steuern/Regeln zumindest eines Ventils des Gasversorgungssystems vorbereitet.

In einer vorteilhaften Ausgestaltung ist in einer Wandung des metallurgischen Gefäßes, vorzugsweise in dessen Boden, zumindest ein Spülstein zum Einleiten des Spülgases in das Metallbad angeordnet. Dieser Spülstein kann ein Bestandteil des Gasversorgungssystems sein.

Bevorzugt ist eine Mehrzahl von Spülsteinen im Boden des metallurgischen Gefäßes angeordnet. Ferner kann eine Anordnung der Spülsteine eine Symmetrieachse aufweisen, die auch eine Symmetrieachse des metallurgischen Gefäßes ist. Die Spülsteine können z.B. kreisförmig, insbesondere in Form von konzentrischen Kreisen, im Boden des metallurgischen Gefäßes angeordnet sein.

Des Weiteren kann zumindest einen Durchflusssensor zum Messen einer Spülgasdurchflussmenge und/oder zumindest einen Drucksensor zum Messen eines Spülgasdrucks vorgesehen sein. Der Durchflusssensor bzw. der Drucksensor kann ebenfalls ein Bestandteil des Gasversorgungssystems.

Das Gasversorgungssystems weist sinnvollerweise zumindest eine Gasleitung auf, die mit einem der Spülsteine oder mit der Gaslanze verbunden ist. Die zumindest eine Gasleitung kann mit einem solchen Durchflusssensor zum Messen einer Spülgasdurchflussmenge und/oder einem solchen Drucksensor zum Messen eines Spülgasdrucks ausgestattet sein. Außerdem kann die zumindest eine Gasleitung mit einem Ventil, insbesondere einem elektrisch steuer-/regelbaren Ventil, ausgestattet sein. Das Ventil kann u.a. als Proportional- oder Digitalventil ausgeführt sein.

In bevorzugter Weise umfasst das Gasversorgungssystem eine Mehrzahl von Gasleitungen. Diese Gasleitungen können jeweils mit einem Ventil, insbesondere einem solchen elektrisch steuer-/regelbaren Proportional- oder Digitalventil, ausgestattet sein. Weiterhin können die Ventile unabhängig voneinander steuer-/regelbar sein. Zudem können die Gasleitungen jeweils mit einem solchen Durchflusssensor zum Messen einer Spülgasdurchflussmenge und/oder einem solchen Drucksensor zum Messen eines Spülgasdrucks ausgestattet sein. Zweckmäßigerweise sind die Gasleitungen des Gasversorgungssystems jeweils mit einem der Spülsteine oder mit der Gaslanze verbunden.

Zumindest zwei der Spülsteine können zu einer Spülsteingruppe zusammengefasst sein, wobei eine Spülgaszufuhr zu den einzelnen Spülsteinen der Spülsteingruppe unter Verwendung eines gemeinsamen Ventils steuer-/regelbar sein kann.

Es ist zweckmäßig, wenn die Messeinrichtung mit einer Kontrolleinheit, insbesondere mit der zuvor erwähnten, zum Steuern/Regeln des Gasversorgungsystems vorbereiteten Kontrolleinheit, verbunden ist. Die Messeinrichtung kann z.B. unter Verwendung einer Datenleitung mit der Kontrolleinheit verbunden sein. Dies ermöglicht es, von der Messeinrichtung aufgenommene Messsignale an die Kontrolleinheit zurückzuführen.

Weiterhin kann die Kontrolleinheit als ein Regler einer Regelung ausgeführt sein.

Weiter ist es zweckmäßig, wenn die Messeinrichtung zur Ermittlung zumindest einer Zustandsgröße der Vibration des metallurgischen Gefäßes, insbesondere einer Amplitude und/oder Frequenz der Vibration, vorbereitet ist.

Vorzugsweise umfasst die Messeinrichtung mehrere Vibrationssensoren, mehrere Ultraschallsensoren und/oder mehrere optoelektronische Sensoren. Denn mit mehreren solcher Sensoren wird es erleichtert, das Strömungsbild des Metallbades zu ermitteln und/oder Abweichung einer momentanen Strömung des Metallbades von der vorgegebenen gerichteten Strömung zu lokalisieren. Alternativ oder zusätzlich zu besagten Sensoren kann die Messeinrichtung ein Kamerasystem umfassen.

Weiter ist es zweckmäßig, wenn die Kontrolleinheit dazu vorbereitet ist, unter Verwendung zumindest einer Zustandsgröße der Vibration des metallurgischen Gefäßes und/oder unter Verwendung mehrerer Einzelbilder einer mit Hilfe des Kamerasystems erstellten Videoaufnahme das Strömungsbild des Metallbades zu ermitteln.

Die Kontrolleinheit kann derart ausgestaltet sein, dass beim Steuern/Regeln einer Steuer-/Regelgröße, wie z.B. der Spülgasdurchflussmenge, zumindest ein Parameter berücksichtigt wird, der eine Dynamik des Steuer-/Regelverhaltens der Regelung beeinflusst. Ein solcher Parameter kann z.B. eine Stellzeit eines der Ventile oder eine Reaktionszeit eines der Sensoren sein.

Die bisher gegebene Beschreibung vorteilhafter Ausgestaltungen enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren/der erfindungsgemäßen Ofenanlage kombinierbar.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Ofenanlage mit einem metallurgischen Gefäß, einem Gasversorgungssystem sowie einer Kontrolleinheit,
- FIG 2: einen perspektivischen Schnitt durch das metallurgische Gefäß aus FIG 1,
- FIG 3: eine weitere Ofenanlage mit einem metallurgischen Gefäß, einem Gasversorgungssystem sowie einer Kontrolleinheit und
- FIG 4: ein Diagramm, in dem ein exemplarischer zeitlicher Verlauf einer Spülgasdurchflussmenge dargestellt ist.

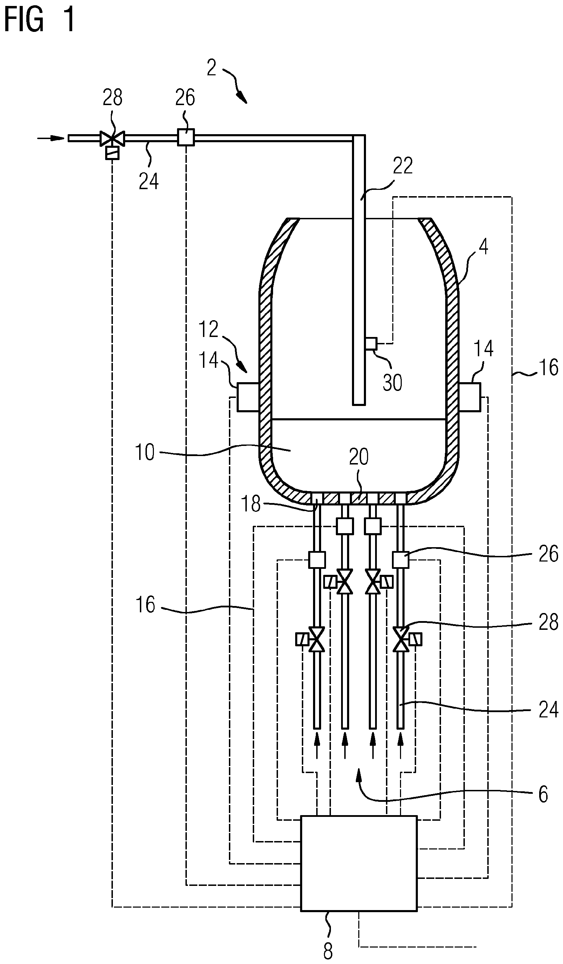

FIG 1 zeigt schematisch eine Ofenanlage 2 mit einem metallurgischen Gefäß 4, einem Gasversorgungssystem 6 und einer Kontrolleinheit 8.

Im vorliegenden Ausführungsbeispiel ist das metallurgische Gefäß 4 ein Konverter zum Frischen von Roheisen. In dem metallurgischen Gefäß 4 befindet sich ein Metallbad 10, das flüssiges Roheisen, einen Schlackenbildner sowie Schrott enthält. Im flüssigen Roheisen sind zudem unerwünschte Begleitelemente, wie z.B. Kohlenstoff, Silizium, Mangan, Schwefel und Phosphor enthalten.

Ferner weist die Ofenanlage 2 eine Messeinrichtung 12 zur Untersuchung eines Strömungsbildes des Metallbades 10 auf. Die Messeinrichtung 12 umfasst mehrere Vibrationssensoren 14, die am metallurgischen Gefäß 4 angebracht sind und jeweils über eine Datenleitung 16 mit der Kontrolleinheit 8 verbunden sind. (In FIG 1 sind exemplarisch zwei der Vibrationssensoren 14 dargestellt.)

Des Weiteren ist die Messeinrichtung 12 zur Ermittlung zweier Zustandsgrößen einer Vibration des metallurgischen Gefäßes 4 vorbereitet, nämlich der Amplitude der Vibration und der Frequenz der Vibration. Die Kontrolleinheit 8 ist dazu vorbereitet, aus den ermittelten Zustandsgrößen der Vibration ein Strömungsbild des Metallbades 10 zu er-mitteln.

Grundsätzlich könnte die Messeinrichtung 12 an Stelle der Vibrationssensoren 14 oder zusätzlich zu den Vibrationssensoren 14 zumindest einen Ultraschallsensor und/oder zumindest einen optoelektronischen Sensor zum Ermitteln der Zustandsgrößen aufweisen.

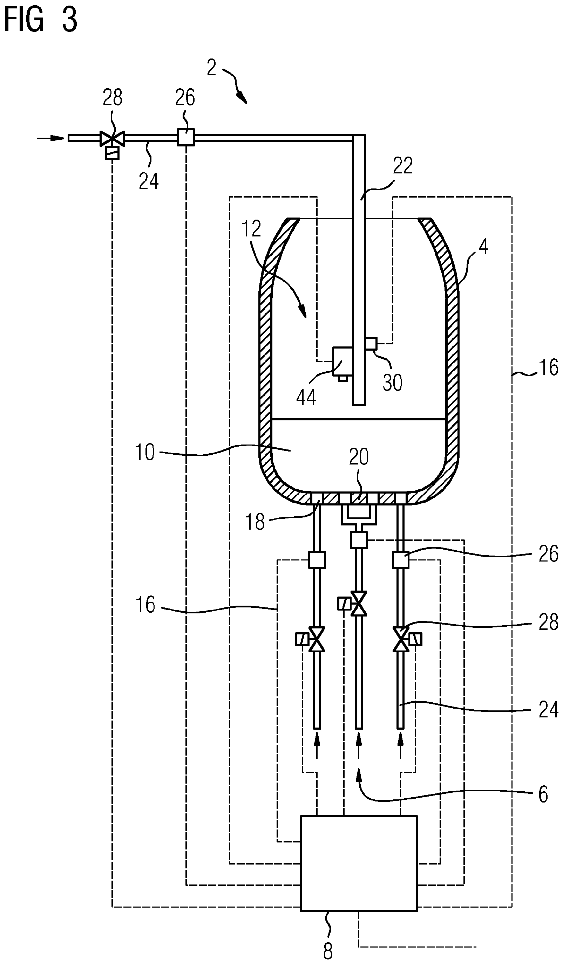

Das Gasversorgungssystem 6 umfasst eine Mehrzahl von Spülsteinen 18 zum Einleiten eines Spülgases in das Metallbad 10. Diese Spülsteine 18 sind in einem Boden 20 des metallurgischen Gefäßes 4 angeordnet. Dabei sind die Spülsteine 18 in Form zweier konzentrischer Kreise ("Spülsteinkreise") angeordnet, was in FIG 1 jedoch nicht zu erkennen ist. In dem in FIG 1 dargestellten Schnitt des metallurgischen Gefäßes 4 sind lediglich zwei der Spülsteine 18 des inneren der zwei konzentrischen Spülsteinkreise sowie zwei der Spülsteine 18 des äußeren der zwei konzentrischen Spülsteinkreise zu erkennen. Für eine Darstellung, in der besagte Anordnung der Spülsteine 18 zu erkennen ist, sei auf FIG 3 verwiesen.

Weiterhin umfasst das Gasversorgungssystem 6 eine ausfahrbare Gaslanze 22 zum Einleiten eines Gases in das Metallbad 10. Das Gasversorgungssystem 6 umfasst außerdem mehrere Gasleitungen 24. Eine dieser Gasleitungen 24 ist mit der Gaslanze 22 verbunden. Die übrigen dieser Gasleitungen 24 sind mit den Spülsteinen 18 verbunden.

Jede der Gasleitungen 24 ist mit einem Durchflusssensor 26 zum Messen einer Spülgasdurchflussmenge ausgestattet. Die Durchflusssensoren 26 sind jeweils über eine Datenleitung 16 mit der Kontrolleinheit 8 verbunden.

Grundsätzlich könnte eine beliebige Anzahl der Gasleitungen 24 an Stelle solcher Durchflusssensoren 26 oder zusätzlich zu solchen Durchflusssensoren 26 Drucksensoren zum Messen eines Spülgasdrucks umfassen.

Des Weiteren ist jede der Gasleitungen 24 mit einem elektrisch steuer-/regelbaren Ventil 28 ausgestattet. Im vorliegenden Ausführungsbeispiel sind die Ventile 28 als Proportionalventile ausgeführt. Die Ventile 28 sind jeweils über eine Datenleitung 16 mit der Kontrolleinheit 8 verbunden, sodass Steuer-/Regelbefehle von der Kontrolleinheit 8 an die Ventile 28 übermittelbar sind. Außerdem sind die Ventile 28 unabhängig voneinander mittels der Kontrolleinheit 8 steuer-/regelbar, sodass die Spülsteine 18 mit unterschiedlichen Spülgasdurchflussmengen beaufschlagbar sind, die Spülgasdurchflussmengen können sich insbesondere in ihrer Amplitude, Frequenz und/oder Phase voneinander unterscheiden.

An der Gaslanze 22 ist ein Drucksensor 30 zum Messen eines Gasdrucks im metallurgischen Gefäß 4 angeordnet. Dieser Drucksensor 30 ist ebenfalls über eine Datenleitung 16 mit der Kontrolleinheit 8 verbunden.

Ferner ist die Kontrolleinheit 8 dazu vorbereitet, ihr Steuer-/Regelverhalten in Abhängigkeit von Parametern, die an die Kontrolleinheit 8 übermittelbar sind, zu verändern.

Zuerst werden eine Masse des flüssigen Roheisens, eine Masse des beigefügten Schrotts sowie eine Masse des Schlackenbildners als Parameter an die Kontrolleinheit 8 übermittelt. Außerdem werden Gehälter der Begleitelemente im flüssigen Roheisen als Parameter an die Kontrolleinheit 8 übermittelt.

Durch die Gaslanze 22 wird Sauerstoff mit einem Druck von ca. 10 bar in das Metallbad 10 eingeleitet/auf das Metallbad 10 aufgeblasen. Dabei verbrennen die unerwünschten Begleitelemente im Metallbad 10 und entweichen als Gase oder werden durch den Schlackenbildner in Form von flüssiger Schlacke gebunden. Außerdem erfolgt beim Aufblasen des Sauerstoffs eine Umwälzung des Metallbades 10.

Durch die Spülsteine 18 werden zunächst Sauerstoff, dann Stickstoff und zuletzt Argon als Spülgase, unmittelbar in das Metallbad 10 eingeleitet, wobei Stickstoff für einen längeren Zeitraum in das Metallbad 10 eingeleitet wird als Sauerstoff oder Argon. Das Einleiten der Spülgase in das Metallbad 10 bewirkt eine zusätzliche Umwälzung des Metallbades 10.

Das jeweilige Gas, das als Spülgas durch die Spülsteine 18 in das Metallbad eingeleitet wird, wird derart in das metallurgische Gefäß 4 eingeleitet, dass das Metallbad 10 eine gerichtete Strömung vollführt. Dabei wird die jeweilige Spülgasdurchflussmenge, mit der die Spülsteine 18 beaufschlagt werden, unter Verwendung der zuvor erwähnten Durchflusssensoren 26 ermittelt und unter Verwendung der zuvor erwähnten Ventile 28 gesteuert/geregelt, wobei Ventilstellungen der Ventile 28 mit Hilfe der Kontrolleinheit 8 gesteuert/geregelt werden.

Außerdem werden eine momentane Sauerstoffdurchflussmenge, mit der die Gaslanze 22 beaufschlagt wird, sowie eine Dauer des Sauerstoffaufblasens erfasst und als Parameter an die Kontrolleinheit 8 übermittelt. Zudem wird mit Hilfe des Drucksensors 30, der an der Gaslanze 22 angeordnet ist, der Gasdruck im metallurgischen Gefäß 4 ermittelt und der ermittelte Gasdruck als Parameter an die Kontrolleinheit 8 übermittelt.

Unter Verwendung der Messeinrichtung 12 wird ein Strömungsbild des Metallbades 10 ermittelt. Dabei wird mit Hilfe der Messeinrichtung 12 die Amplitude und die Frequenz der Vibration des metallurgischen Gefäßes 4 ermittelt und an die Kontrolleinheit 8 übertragen. Die Kontrolleinheit 8 wiederum ermittelt unter Verwendung der Amplitude und/oder unter Verwendung der Frequenz das Strömungsbild des Metallbades 10.

Weiterhin wird das Spülgas derart in das Metallbad 10 eingeleitet, dass die Frequenz der Vibration außerhalb eines einstellbaren Frequenzintervalls gehalten wird. Das Frequenzintervall wird dabei so gewählt, dass eine Eigenfrequenz der Ofenanlage 2 innerhalb des Frequenzintervalls liegt. Ferner wird das Spülgas derart in das Metallbad 10 eingeleitet, dass die Amplitude der Vibration unterhalb eines einstellbaren Amplitudenhöchstwerts gehalten wird.

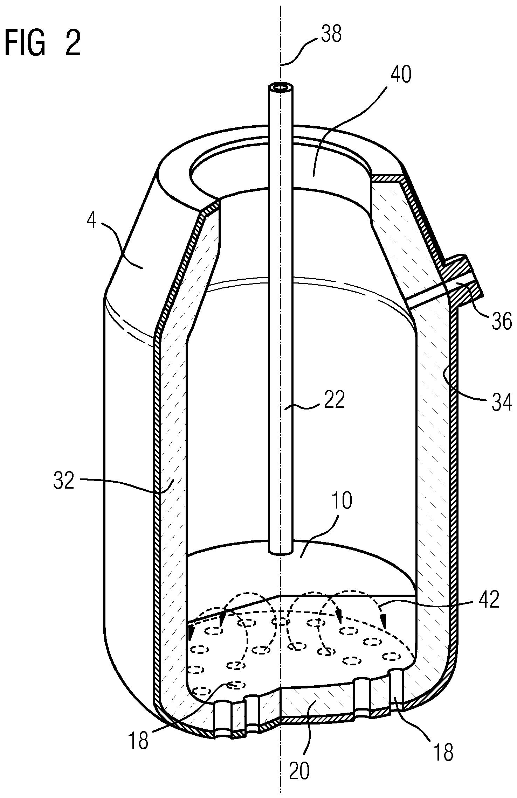

FIG 2 zeigt einen perspektivischen Schnitt durch das metallurgische Gefäß 4 aus FIG 1.

Das metallurgische Gefäß 4 ist mit einer feuerfesten Ausmauerung 32 ausgestattet. Zum Ableiten des im metallurgischen Gefäß 4 befindlichen Metallbades 10 weist das metallurgische Gefäß 4 in seiner Wandung 34 eine Abstichöffnung 36 auf. Wenn man von der Abstichöffnung 36 in der Wandung 34 absieht, ist das metallurgische Gefäß 4 im Wesentlichen axialsymmetrisch bezüglich einer Symmetrieachse 38.

An seiner Oberseite weist das metallurgische Gefäß 4 eine Öffnung 40 auf, durch welche die Gaslanze 22 geführt ist. Die Gaslanze 22 ist dabei entlang der Symmetrieachse 38 angeordnet. Der an der Gaslanze 22 angeordnete Drucksensor 30 zum Messen des Gasdrucks im metallurgischen Gefäß 4 (vgl. FIG 1) ist der Übersichtlichkeit halber in FIG 2 nicht dargestellt.

Die Spülsteine 18 zum Einleiten des Spülgases in das Metallbad 10 sind in Form von zwei konzentrischen Spülsteinkreisen im Boden 20 des metallurgischen Gefäßes angeordnet. Dabei sind die Spülsteine 18 radialsymmetrisch bezüglich der Symmetrieachse 38 des metallurgischen Gefäßes 4 angeordnet.

Ferner sind in FIG 2 vier gestrichelte Pfeile abgebildet, die eine bevorzugte vorgegebene Strömungsrichtung 42 des Metallbades 10 veranschaulichen sollen. Die vorgegebene gerichtete Strömung des Metallbades 10 verläuft bevorzugt in poloidaler Richtung eines Torus (nicht dargestellt), dessen Symmetrieachse auch die Symmetrieachse 38 des metallurgischen Gefäßes 4 ist. Vorzugsweise verläuft die vorgegebene gerichtete Strömung bei ihrem Wechsel von einer Aufwärtsbewegung zu einer Abwärtsbewegung von der Symmetrieachse 38 weg.

FIG 3 zeigt schematisch eine weitere Ofenanlage 2 mit einem metallurgischen Gefäß 4, einem Gasversorgungssystem 6 und einer Kontrolleinheit 8.

Die nachfolgende, im Zusammenhang mit FIG 3 diskutierte Beschreibung beschränkt sich im Wesentlichen auf die Unterschiede zum Ausführungsbeispiel in FIG 1, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind im folgenden Ausführungsbeispiel übernommen, ohne dass sie erneut beschrieben sind.

Die Messeinrichtung 12 der weiteren Ofenanlage 2 umfasst ein Kamerasystem 44, welches an der Gaslanze angeordnet ist und zumindest eine Kamera umfasst. Weiterhin ist das Kamerasystem 44 über eine Datenleitung 16 mit der Kontrolleinheit 8 verbunden ist.

Die Kontrolleinheit 8 ist dazu vorbereitet, unter Verwendung mehrerer Einzelbilder einer mit Hilfe des Kamerasystems 44 erstellten Videoaufnahme des Metallbades 10 das Strömungsbild des Metallbades 10 zu ermitteln.

Anstatt Zustandsgrößen der Vibration des metallurgischen Gefäßes 4 zu ermitteln, wie dies im Ausführungsbeispiel aus FIG 1 erfolgt, wird mit Hilfe des Kamerasystems 44 eine Videoaufnahme des Metallbades 10 erstellt. Mehrere Einzelbilder der Videoaufnahme werden über besagte Datenleitung 16 an die Kontrolleinheit 8 übertragen, die unter Verwendung der Einzelbilder das Strömungsbild des Metallbades 10 ermittelt.

Im vorliegenden Ausführungsbeispiel sind die Spülsteine 18 des inneren der zwei Spülsteinkreise zu einer Spülsteingruppe zusammengefasst. Diese Spülsteine 18 sind mit gleichen Spülgasdurchflussmengen beaufschlagbar, da diese Spülsteine 18 mit einer gemeinsamen Gasleitung 24 verbunden sind und eine Spülgaszufuhr zu diesen Spülsteinen 18 unter Verwendung eines gemeinsamen Ventils 28 steuer-/regelbar ist. Folglich werden die Spülsteine 18 des inneren der zwei Spülsteinkreise stets mit gleichen Spülgasdurchflussmengen beaufschlagt. Die Spülsteine 18 des äußeren der zwei Spülsteinkreise sind mit unterschiedlichen Spülgasdurchflussmengen beaufschlagbar, da diese Spülsteine 18 jeweils mit einer eigenen Gasleitung 24 verbunden sind und eine Spülgaszufuhr zu diesen Spülsteinen 18 jeweils unter Verwendung eines gemeinsamen Ventils 28 steuer-/regelbar ist.

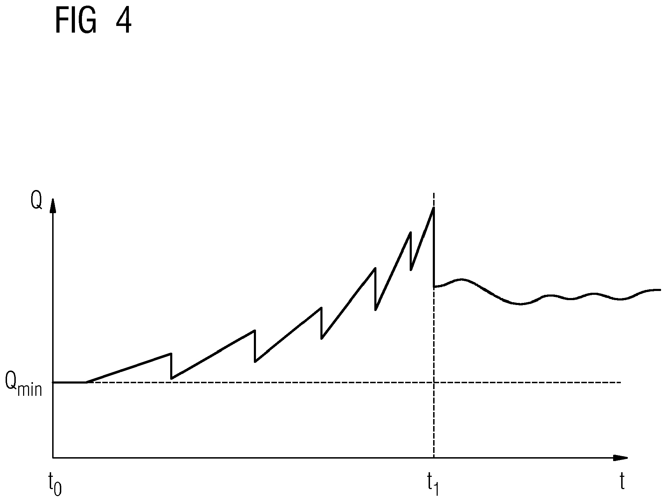

FIG 4 zeigt ein Diagramm, in dem ein exemplarischer zeitlicher Verlauf einer Spülgasdurchflussmenge dargestellt ist, mit der einer der Spülsteine 18 beaufschlagt wird oder mehrere der Spülsteine 18 beaufschlagt werden.

Auf der Abszisse des Diagramms ist eine Zeit t aufgetragen, während auf der Ordinate des Diagramms eine Spülgasdurchflussmenge Q aufgetragen ist.

Zum Zeitpunkt t0 wird mit dem Einleiten des Spülgases in das Metallbad 10 begonnen. Bis zum Zeitpunkt t1 wird die Spülgasdurchflussmenge Q unter Verwendung der Kontrolleinheit 8 gesteuert. (D.h. es erfolgt keine Rückführung der von den Durchflusssensoren 26 gemessen Messsignale an die Kontrolleinheit 8). Dadurch soll eine schnelle Erzeugung der vorgegebenen gerichteten Strömung des Metallbades 10 erreicht werden. Zur Erzeugung der vorgegebenen gerichteten Strömung hat die Spülgasdurchflussmenge Q bis zum Zeitpunkt t1 einen sägezahnförmigen Verlauf, wobei eine Amplitude und eine Frequenz der Spülgasdurchflussmenge Q mit der Zeit t zunehmen.

Zum Zeitpunkt t1 ist die vorgegebene gerichtete Strömung des Metallbades 10 ausgebildet. Ab diesem Zeitpunkt wird die Spülgasdurchflussmenge Q unter Verwendung der Kontrolleinheit 8 geregelt. (D.h. die von den Durchflusssensoren 26 gemessenen Messsignale werden an die Kontrolleinheit 8 zurückgeführt.) Zur Aufrechterhaltung der vorgegebenen gerichteten Strömung hat die Spülgasdurchflussmenge Q ab dem Zeitpunkt t1 einen pulsierenden zeitlichen Verlauf.

Die Spülgasdurchflussmenge Q wird während des gesamten dargestellten Zeitraums über einer von der Kontrolleinheit 8 vorgegebenen Mindestdurchflussmenge Qmin gehalten. Die Mindestdurchflussmenge Qmin wird von der Kontrolleinheit 8 derart eingestellt, dass ein Spülgasdruck an einer Gasausgangsseite des Spülsteins/der Spülsteine 18 zumindest so groß ist wie ein Metallbaddruck an der Gasausgangsseite des Spülsteins/der Spülsteine 18. Dadurch soll ein Eindringen des Metallbades 10 in den Spülstein/die Spülsteine 18 verhindert werden. Der Metallbaddruck wird von der Kontrolleinheit 8 aus dem Gasdruck im metallurgischen Gefäß 4 sowie aus den Massen der Bestandteile des Metallbades 10 berechnet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Verfahren zum Umwälzen eines Metallbades (10) in einem metallurgischen Gefäß (4), bei dem ein Spülgas in das Metallbad (10) eingeleitet wird,
**dadurch gekennzeichnet, dass** das Spülgas durch eine systematische Anordnung von Gaseinleitungspositionen in dem metallurgischen Gefäß (4) derart in das Metallbad (10) eingeleitet wird, dass das Metallbad (10) eine vorgegebene gerichtete Strömung vollführt, wobei zur Erzeugung und/oder Aufrechterhaltung der vorgegebenen gerichteten Strömung das Einleiten des Spülgases gesteuert/geregelt wird, wobei unter Verwendung einer Messeinrichtung (12), welche zumindest einen Vibrationssensor (14), zumindest einen Ultraschallsensor und/oder zumindest einen optoelektronischen Sensor umfasst, ein Strömungsbild des Metallbades (10) ermittelt wird.

2. Verfahren nach Anspruch 1,
**dadurch gekennzeichnet, dass** das Spülgas unter Verwendung zumindest eines Spülsteins (18) in das Metallbad (10) eingeleitet wird.

3. Verfahren nach Anspruch 1 oder 2,
**dadurch gekennzeichnet, dass** eine Spülgasdurchflussmenge (Q) oder ein Spülgasdruck unter Verwendung zumindest eines Ventils (28) gesteuert/geregelt wird.

4. Verfahren nach Anspruch 3,
**dadurch gekennzeichnet, dass** die Spülgasdurchflussmenge (Q) einen gepulsten, pulsierenden oder sägezahnförmigen zeitlichen Verlauf aufweist.

5. Verfahren nach einem der vorhergehenden Ansprüche,
**dadurch gekennzeichnet, dass** nacheinander unterschiedliche Gase, insbesondere Sauerstoff und zumindest ein Inertgas, als Spülgase in das Metallbad (10) eingeleitet werden.

6. Verfahren nach einem der vorhergehenden Ansprüche,
**dadurch gekennzeichnet, dass** unter Verwendung der Messeinrichtung (12) zumindest eine Zustandsgröße einer Vibration des metallurgischen Gefäßes (4), insbesondere eine Amplitude und/oder eine Frequenz der Vibration, ermittelt wird und das Strömungsbild des Metallbades (10) unter Verwendung der Zustandsgröße ermittelt wird.

7. Verfahren nach Anspruch 6,
**dadurch gekennzeichnet, dass** das Spülgas derart in das Metallbad (10) eingeleitet wird, dass die Zustandsgröße außerhalb eines vorgegebenen/einstellbaren Werteintervalls oder unterhalb eines vorgegebenen/einstellbaren Höchstwerts gehalten wird.

8. Verfahren nach einem der vorhergehenden Ansprüche,
**dadurch gekennzeichnet, dass** das Spülgas unter Verwendung mehrerer Spülsteine (18) in das Metallbad (10) eingeleitet wird.

9. Ofenanlage (2) zur Durchführung eines Verfahrens nach einem der vorhergehenden Ansprüche aufweisend ein metallurgisches Gefäß (4),
**gekennzeichnet durch** eine Messeinrichtung (12) zur Untersuchung eines Strömungsbildes eines im metallurgischen Gefäß (4) befindlichen Metallbades (10), welche zumindest einen Vibrationssensor (14), zumindest einen Ultraschallsensor und/oder zumindest einen optoelektronischen Sensor umfasst.

10. Ofenanlage (2) nach Anspruch 9,
**dadurch gekennzeichnet, dass** das metallurgische Gefäß (4) ein Konverter zum Frischen von Roheisen ist.

11. Ofenanlage (2) nach Anspruch 9 oder 10,
**gekennzeichnet durch** ein Gasversorgungssystem (6) zum Einleiten eines Spülgases in das Metallbad (10), insbesondere aufweisend zumindest eine Gasleitung (24), zumindest ein Ventil (28) und/oder zumindest einen Spülstein (18), und/oder durch eine Kontrolleinheit (8), die zum Steuern/Regeln eines solchen Gasversorgungssystems (6) vorbereitet ist.

12. Ofenanlage (2) nach einem der Ansprüche 9 bis 11,
**gekennzeichnet durch** zumindest einen in einem Boden (20) des metallurgischen Gefäßes (4) angeordneten Spülstein (18) zum Einleiten eines Spülgases in das Metallbad (10).

13. Ofenanlage (2) nach einem der Ansprüche 9 bis 12,
**gekennzeichnet durch** zumindest einen Durchflusssensor (26) zum Messen einer Spülgasdurchflussmenge (Q) und/oder zumindest einen Drucksensor zum Messen eines Spülgasdrucks.

## Claims

1. Method for circulating a metal bath (10) in a metallurgical vessel (4), in which a flushing gas is introduced into the metal bath (10),
**characterised in that** the flushing gas is introduced into the metal bath (10) by means of a systematic arrangement of gas introduction positions in the metallurgical vessel (4) in such a manner the metal bath (10) carries out a predefined directed flow, wherein in order to produce and/or maintain the predefined directed flow the introduction of the flushing gas is controlled/regulated, wherein a measurement device (12), which comprises at least one vibration sensor (14), at least one ultrasound sensor and/or at least one optoelectronic sensor, is used to ascertain a flow pattern of the metal bath (10).

2. Method according to claim 1,
**characterised in that** the flushing gas is introduced into the metal bath (10) by using at least one bottom plug (18).

3. Method according to claim 1 or 2,
**characterised in that** a flushing gas flow volume (Q) or a flushing gas pressure is controlled/regulated by using at least one valve (28).

4. Method according to claim 3,
**characterised in that** the flushing gas flow volume (Q) exhibits a pulsed, pulsating or sawtooth timing pattern.

5. Method according to one of the preceding claims,
**characterised in that** different gases, in particular oxygen and at least one inert gas, are introduced in succession as flushing gases into the metal bath (10).

6. Method according to one of the preceding claims,
**characterised in that** at least one state variable of a vibration of the metallurgical vessel (4), in particular an amplitude and/or a frequency of the vibration, is ascertained by using the measurement device (12) and the flow pattern of the metal bath (10) is ascertained by using the state variable ascertained.

7. Method according to claim 6,
**characterised in that** the flushing gas is introduced into the metal bath (10) in such a manner that the state variable is held outside a predefined/configurable value interval or below a predefined/configurable maximum value.

8. Method according to one of the preceding claims,
**characterised in that** the flushing gas is introduced into the metal bath (10) by using a plurality of bottom plugs (18).

9. Furnace system (2) for carrying out a method according to one of the preceding claims, having a metallurgical vessel (4),
**characterised by** a measurement device (12) for monitoring a flow pattern of a metal bath (10) situated in the metallurgical vessel (4), which measurement device (12) comprises at least one vibration sensor (14), at least one ultrasound sensor and/or at least one optoelectronic sensor.

10. Furnace system (2) according to claim 9,
**characterised in that** the metallurgical vessel (4) is a converter for refining raw iron.

11. Furnace system (2) according to claim 9 or 10,
**characterised by** a gas supply system (6) for introducing a flushing gas into the metal bath (10), in particular having at least one gas line (24), at least one valve (28) and/or at least one bottom plug (18), and/or by a control unit (8) which is set up in order to control/regulate such a gas supply system (6).

12. Furnace system (2) according to one of claims 9 to 11,
**characterised by** at least one bottom plug (18) arranged in a base (20) of the metallurgical vessel (4) for introducing a flushing gas into the metal bath (10).

13. Furnace system (2) according to one of claims 9 to 12,
**characterised by** at least one flow sensor (26) for measuring a flushing gas flow volume (Q) and/or at least one pressure sensor for measuring a flushing gas pressure.

## Revendications

1. Procédé de circulation d'un bain de métal (10) dans un récipient métallurgique (4), dans lequel un gaz de circulation est introduit dans le bain de métal (10), **caractérisé en ce que** le gaz de circulation est introduit dans le bain de métal (10) grâce à un agencement systématique de positions d'introduction de gaz dans le récipient métallurgique (4), de façon que le bain de métal (10) réalise un écoulement à orientation prédéfinie, dans lequel, pour produire et/ou maintenir l'écoulement à orientation prédéfinie, l'introduction du gaz de circulation est commandée/régulée, dans lequel un modèle d'écoulement du bain de métal (10) est déterminé au moyen d'un dispositif de mesure (12) qui comprend au moins un capteur de vibrations (14), au moins un capteur à ultrasons et/ou au moins un capteur opto-électronique.

2. Procédé selon la revendication 1,
**caractérisé en ce que** le gaz de circulation est introduit dans le bain de métal (10) au moyen d'au moins un bouchon poreux (18).

3. Procédé selon la revendication 1 ou 2,
**caractérisé en ce qu'**un débit de gaz de circulation (Q) ou une pression de gaz de circulation est commandé(e)/régulé(e) au moyen d'au moins une soupape (28) .

4. Procédé selon la revendication 3,
**caractérisé en ce que** la variation dans le temps du débit de gaz de circulation (Q) a une allure pulsée, ondulée ou en dents de scie.

5. Procédé selon l'une des revendications précédentes,
**caractérisé en ce que** des gaz différents, notamment de l'oxygène et au moins un gaz inerte, sont introduits les uns après les autres, en tant que gaz de circulation, dans le bain de métal (10).

6. Procédé selon l'une des revendications précédentes,
**caractérisé en ce qu'**au moins une grandeur d'état d'une vibration du récipient métallurgique (4), notamment une amplitude et/ou une fréquence de la vibration, est déterminée au moyen du dispositif de mesure (12), et le profil d'écoulement du bain de métal (10) est déterminé à l'aide de la grandeur d'état.

7. Procédé selon la revendication 6,
**caractérisé en ce que** le gaz de circulation est introduit dans le bain de métal (10) de façon que la grandeur d'état soit maintenue en dehors d'un intervalle de valeurs prédéfini/réglable ou en dessous d'une valeur maximale prédéfinie/réglable.

8. Procédé selon l'une des revendications précédentes,
**caractérisé en ce que** le gaz de circulation est introduit dans le bain de métal (10) au moyen de plusieurs bouchons poreux (18).

9. Installation de four (2) pour l'exécution d'un procédé selon l'une des revendications précédentes comprenant un récipient métallurgique (4),
**caractérisée par** un dispositif de mesure (12) permettant d'analyser un profil d'écoulement d'un bain de métal (10) se trouvant dans le récipient métallurgique (4), lequel dispositif de mesure comprend au moins un capteur de vibrations (14), au moins un capteur à ultrasons et/ou au moins un capteur opto-électronique.

10. Installation de four (2) selon la revendication 9,
**caractérisée en ce que** le récipient métallurgique (4) est un convertisseur destiné à l'affinage de fonte brute.

11. Installation de four (2) selon la revendication 9 ou 10,
**caractérisée par** un système d'alimentation de gaz (6) permettant l'introduction d'un gaz de circulation dans le bain de métal (10), comprenant notamment au moins une conduite de gaz (24), au moins une soupape (28) et/ou au moins un bouchon poreux (18), et/ou par une unité de contrôle (8) qui est conçue pour commander/réguler un tel système d'alimentation de gaz (6).

12. Installation de four (2) selon l'une des revendications 9 à 11,
**caractérisée par** au moins un bouchon poreux (18) placé dans un fond (20) du récipient métallurgique (4), permettant l'introduction d'un gaz de circulation dans le bain de métal (10).

13. Installation de four (2) selon l'une des revendications 9 à 12,
**caractérisée par** au moins un capteur de débit (26) pour mesurer un débit de gaz de circulation (Q) et/ou au moins un capteur de pression pour mesurer une pression de gaz de circulation.
